# EUROPEAN PATENT APPLICATION

(11) **EP 4 848 742 A1**
(43) Date of publication of application: **02.12.2026**
(21) Application number: 25761145.9
(22) Date of filing: 28.02.2025
(51) Int. Cl.: H04N 23/63

(54) **PHOTOGRAPHY METHOD AND ELECTRONIC DEVICE**

(30) Priority: 28.02.2024 CN 202410223758
(71) Applicant: Huawei Technologies Co., Ltd., Shenzhen, Guangdong 518129 (CN)
(72) Inventor: LIU, Chuangchuang, Shenzhen, Guangdong 518129 (CN); XIE, Yu, Shenzhen, Guangdong 518129 (CN); DING, Ruolan, Shenzhen, Guangdong 518129 (CN); JIANG, Chunli, Shenzhen, Guangdong 518129 (CN)
(74) Representative: Goddar, Heinz J.
(86) International application number: PCT/CN2025/079944
(87) International publication number: WO 2025/180511

(57) **Abstract**

This application provides a photographing method, and the method is applied to an electronic device. In the method, the electronic device may first determine, in a real-time preview picture, a photographing subject that a user wants to photograph, then determine, based on a location of the photographing subject, a recommended composition that includes the photographing subject, and help, through guidance, the user take a photo that is the same as the recommended composition. Therefore, the user can obtain, with assistance of the electronic device, a photo that meets a photographing expectation of the user and that has relatively high quality, thereby enhancing photographing experience of the user.

## Description

### TECHNICAL FIELD

Embodiments of the present invention relate to the field of terminal technologies, and in particular, to a photographing method and an electronic device.

### BACKGROUND

With the development of electronic technologies, increasingly more people are accustomed to taking photos to record lives.

In a process of taking a photo by using an electronic device, due to a lack of photography knowledge, a photo taken by a common user may not meet a composition principle, resulting in insufficient aesthetic quality and a poor effect of the photo. This problem is especially prominent in the social media era. A user wants to take a photo of a relatively high aesthetic value through a simple operation to attract attention and resonance of others. Therefore, how an electronic device assists a user in taking a high-quality photo is a problem that needs to be urgently resolved currently.

### SUMMARY

Embodiments of the present invention provide a photographing method and an electronic device. By implementing the method, a user can obtain, with assistance of an electronic device, a photo that meets a photographing expectation of the user and that has relatively high quality.

According to a first aspect, an embodiment of the present invention provides a photographing method. The method is applied to an electronic device. The method includes: displaying a first real-time preview picture obtained by a first camera; in response to a received user operation performed on a first area of the first real-time preview picture, determining an object located in the first area as a photographing subject; determining a recommended composition based on a location of the photographing subject, where the recommended composition includes the photographing subject; displaying a guide prompt, where the guide prompt is used to guide a user to adjust a photographing orientation, so that a center of the first real-time preview picture coincides with a center of the recommended composition or a distance between the center of the first real-time preview picture and the center of the recommended composition is less than a preset value; and when the center of the first real-time preview picture coincides with the center of the recommended composition or the distance between the center of the first real-time preview picture and the center of the recommended composition is less than the preset value, displaying a second real-time preview picture obtained by a second camera, where a field of view range of the second real-time preview picture is the same as a field of view range of the recommended composition.

After the photographing subject is determined, the recommended composition is determined based on the photographing subject, so that the electronic device can quickly exclude a composition option that does not include the photographing subject, thereby narrowing a recommended composition selection range more quickly. In this way, a speed at which the electronic device determines the recommended composition can be increased.

In addition, the recommended composition determined based on the foregoing policy may be closer to a photographing expectation of the user, thereby preventing a problem that the recommended composition determined by the electronic device does not include a subject that the user wants to photograph, and enhancing user experience in a photographing process.

With reference to the first aspect, in some implementations, the electronic device includes the first camera and the second camera, and a focal length of the first camera is less than a focal length of the second camera.

A smaller focal length indicates a larger photographing field of view of a camera. Therefore, in this manner, a photographing range of the first real-time preview picture obtained by the first camera may be expanded as much as possible, so that the electronic device has a larger recommended composition selection range. In this way, the recommended composition determined by the electronic device may be more aesthetically pleasing, and better meet a photographing expectation of the user.

With reference to the first aspect, in some implementations, determining the recommended composition specifically includes: determining the recommended composition based on the first real-time preview picture; or determining the recommended composition based on a third real-time preview picture obtained by a third camera, where a field of view range of the third real-time preview picture is greater than a field of view range of the first real-time preview picture.

With reference to the first aspect, in some implementations, determining the recommended composition specifically includes: stitching a plurality of first real-time preview pictures at different moments to obtain a stitched picture, where a field of view range of the stitched picture is greater than a field of view range of the first real-time preview picture; and determining the recommended composition based on the stitched picture.

In both of the foregoing implementations, a recommended composition selection range of the electronic device can be expanded as much as possible without user perception. In this way, the recommended composition determined by the electronic device may be more aesthetically pleasing, and better meet a photographing expectation of the user.

With reference to the first aspect, in some implementations, the method further includes: displaying a composition prompt, where the composition prompt indicates a composition rule met by the recommended composition to the user.

If a captured photo does not meet a composition principle, the photo lacks aesthetic quality and has a poor effect. Therefore, the composition prompt is displayed, so that the user can know a composition principle that the electronic device determines and guides a photo taken by the user to meet, thereby improving perception and trust of the user in assistance provided by the electronic device in photographing.

With reference to the first aspect, in some implementations, the guide prompt includes a center positioning mark and a reference positioning mark. The center positioning mark is located at a central location of the first real-time preview picture. The center positioning mark is always located at the central location of the first real-time preview picture, and the reference positioning mark is located at a central location of the recommended composition. When the user adjusts the photographing orientation, a location of the reference positioning mark located in a center of an area in which a reference composition is located continuously changes.

In addition, the guide prompt may further include a thumbnail of the second real-time preview picture, and/or a thumbnail of the recommended composition.

With reference to the first aspect, in some implementations, the user operation includes a tap operation, a touch and hold operation, or a smear operation performed on the first area. The smear operation is an operation of sliding back and forth on a screen surface of the electronic device.

According to a second aspect, an embodiment of the present invention provides an electronic device. The electronic device includes a memory, a processor, and a sensor. The memory is configured to store a computer program, and the processor is configured to invoke the computer program, so that the electronic device performs the method according to the first aspect.

According to a third aspect, an embodiment of the present invention provides a computer program product including instructions. When the computer program product runs on an electronic device, the electronic device is enabled to perform the method according to the first aspect.

According to a fourth aspect, an embodiment of the present invention provides a computer-readable storage medium, including instructions. When the instructions are run on an electronic device, the electronic device is enabled to perform the method according to the first aspect.

### BRIEF DESCRIPTION OF DRAWINGS

FIG. 1A is a diagram of determining a recommended composition by an electronic device according to an embodiment of the present invention;
FIG. 1B is a diagram of content that a user actually wants to photograph in a photographing process according to an embodiment of the present invention;
FIG. 2A is a diagram of a structure of an electronic device 100 according to an embodiment of the present invention;
FIG. 2B is a block diagram of a software structure of an electronic device 100 according to an embodiment of the present invention;
FIG. 3A to FIG. 3F are user interfaces used when an electronic device 100 determines a photographing subject according to an embodiment of the present invention;
FIG. 4A to FIG. 4E are user interfaces of an electronic device 100 that are used when a user is guided to take a photo according to an embodiment of the present invention; and
FIG. 5 is a flowchart of a photographing method according to an embodiment of the present invention.

### DESCRIPTION OF EMBODIMENTS

The following clearly describes the technical solutions in embodiments of the present invention with reference to the accompanying drawings in embodiments of the present invention. Clearly, the described embodiments are merely some but not all of embodiments of the present invention. All other embodiments obtained by a person of ordinary skill in the art based on embodiments of the present invention shall fall within the protection scope of the present invention.

In a photographing scenario, an electronic device may enable a camera, and display a real-time preview picture. The real-time preview picture is a real-time image obtained by the camera of the electronic device. A user may adjust a photographing angle and a photographing parameter by using the real-time preview picture as a reference, to better grasp a photographing process, thereby obtaining a satisfactory photo.

Currently, the electronic device may determine a plurality of recommended compositions based on the real-time preview picture. After the user makes a selection from the plurality of recommended compositions, the electronic device may guide the user to operate the electronic device, so that the user takes a photo that is the same as or similar to a recommended composition selected by the user.

However, when the user is in a photographing environment with a dense crowd and a complex background, the electronic device may be unable to accurately recognize a subject based on the real-time preview picture. In addition, when different users perform photographing by using the electronic device, photographing intentions of the users may be very personalized, and different persons may want to photograph completely different subjects when facing a same scenario. Based on the foregoing two reasons, each recommended composition determined by the electronic device based on the real-time preview picture may not meet an actual photographing expectation of the user.

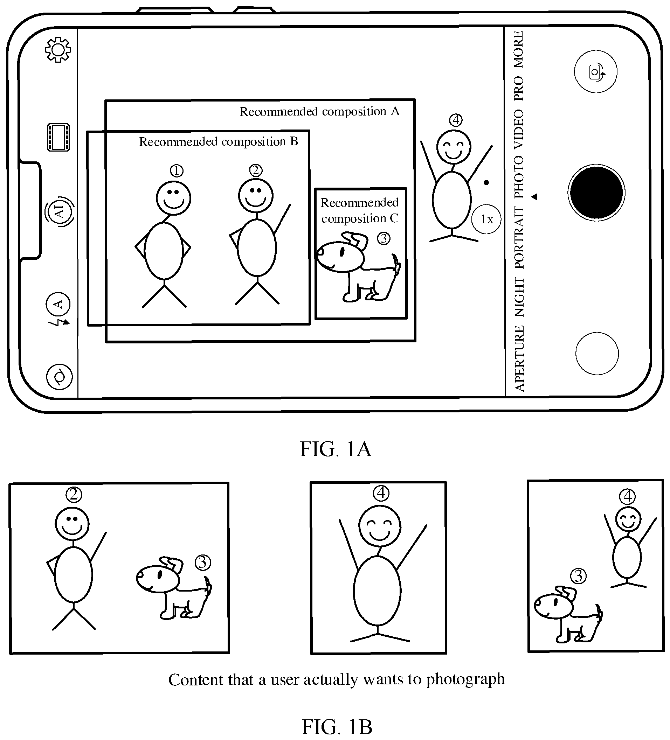

For example, as shown in FIG. 1A, the real-time preview picture obtained by the camera of the electronic device includes four subjects, which are sequentially: ① a figure with hands on hips, ② a figure with a raised hand, ③ a pet dog, and ④ a cheering figure from left to right. The electronic device determines three recommended compositions based on the real-time preview picture, which are respectively: a recommended composition A including ① the figure with hands on hips, ② the figure with a raised hand, and ③ the pet dog; a recommended composition B including ① the figure with hands on hips and ② the figure with a raised hand; and a recommended composition C including only ③ the pet dog. Because ④ the cheering figure is located at an edge of the real-time preview picture, the electronic device 100 may not recognize the subject. Therefore, none of the recommended compositions determined by the electronic device includes ④ the cheering figure. In addition, because there are a plurality of combinations of the subjects in the real-time preview picture, the three recommended compositions determined by the electronic device do not cover all combinations. In FIG. 1B, when a user actually wants to take a photo that includes only ② the figure with a raised hand and ③ the pet dog, or take a photo that includes ④ the cheering figure, or take a photo that includes both ③ the pet dog and ④ the cheering figure, none of the three recommended compositions determined by the electronic device can meet a requirement of the user. Therefore, the user still cannot take a satisfactory photo with assistance of the electronic device. In addition, incorrect composition recommendation may further confuse or frustrate the user, resulting in reduction of user experience in a photographing process.

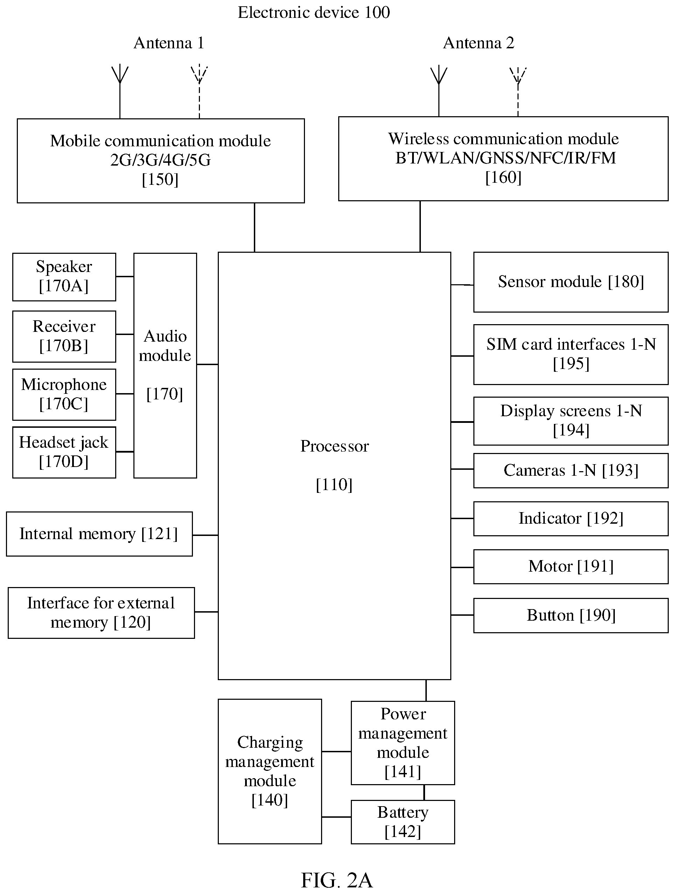

**FIG. 2A** **is a diagram of a structure of an electronic device 100.**

The electronic device 100 in this embodiment of the present invention may be implemented as a mobile phone, a tablet computer, or the like. A specific type of the electronic device 100 is not limited in this embodiment of this application.

The electronic device 100 may include a processor 110, an interface for external memory 120, an internal memory 121, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to control instruction fetching and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from a wired charger through a USB interface 130. In some embodiments of wireless charging, the charging management module 140 may receive a wireless charging input by using a wireless charging coil of the electronic device 100. When charging the battery 142, the charging management module 140 may further supply power to the electronic device by using the power management module 141.

The power management module 141 is configured to connect the battery 142, the charging management module 140, and the processor 110. The power management module 141 receives an input from the battery 142 and/or an input from the charging management module 140, and supplies power to the processor 110, the internal memory 121, an external memory, the display screen 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution for wireless communication that includes 2G/3G/4G/5G and the like and that is applied to the electronic device 100. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave by using the antenna 1 and radiate the electromagnetic wave. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the receiver 170B, or the like), or displays an image or a video by using the display screen 194. In some embodiments, the modem processor may be an independent device. In some other embodiments, the modem processor may be independent of the processor 110, and is disposed in a same device with the mobile communication module 150 or another functional module.

The wireless communication module 160 may provide a solution for wireless communication that is applied to the electronic device 100 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave by using the antenna 2 and radiate the electromagnetic wave.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global satellite positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computation for image rendering. The processor 110 may include one or more GPUs, and the GPUs execute program instructions to generate or change displayed information.

The display screen 194 is configured to display an image, a video, and the like. The display screen 194 includes a display panel. The display panel may be a liquid crystal display (liquid crystal display, LCD). The display panel may alternatively be manufactured by using an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a miniLED, a microLED, a micro-OLED, a quantum dot light emitting diode (quantum dot light emitting diode, QLED), or the like. In some embodiments, the electronic device may include one or N display screens 194, where N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1. Focal lengths of the N cameras included in the electronic device 100 may be different, so as to support a user in taking photos in different field of view ranges by using different cameras in different photographing scenarios. In some embodiments, when the electronic device 100 includes N cameras 193, the electronic device 100 may further simultaneously enable a plurality of cameras 193, and separately process images obtained by the cameras 193.

The digital signal processor is configured to process a digital signal, and may process another digital signal in addition to processing a digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and quickly processes input information by referring to a structure of a biological neural network, for example, by referring to a transmission mode between human brain neurons, and may further continuously perform self-learning. Applications such as intelligent cognition of the electronic device 100 may be implemented by using the NPU, for example, image recognition, facial recognition, speech recognition, and text understanding.

The interface for external memory 120 may be configured to connect to an external storage card, for example, a micro SD card, to extend a storage capability of the electronic device 100. The external storage card communicates with the processor 110 through the interface for external memory 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application program required by at least one function (for example, a sound play function or an image play function), and the like. The data storage area may store data (such as audio data or a phone book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

The electronic device 100 may implement an audio function, for example, music playing or recording, by using the audio module 170, the speaker 170A, the receiver 170B, the microphone 170C, the headset jack 170D, the application processor, and the like.

The button 190 includes a power button, a volume button, and the like. The button 190 may be a mechanical button, or may be a touch-sensitive button. The electronic device 100 may receive a key input, and generate a key signal input related to a user setting and function control of the electronic device 100.

The motor 191 may generate a vibration prompt. The motor 191 may be configured to provide a vibration prompt for an incoming call, and may also be configured to provide a vibration feedback for a touch. For example, touch operations performed on different applications (for example, photo taking and audio playing) may correspond to different vibration feedback effects. For touch operations performed on different areas of the display screen 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status and a power change, and may also be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the electronic device 100. The electronic device 100 may support one or N SIM card interfaces, where N is a positive integer greater than 1. The SIM card interface 195 may support a nano SIM card, a micro SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external storage card. The electronic device 100 interacts with a network through a SIM card, to implement functions such as call making/answering and data communication. In some embodiments, the electronic device 100 uses an eSIM, that is, an embedded SIM card. The eSIM card may be embedded in the electronic device 100, and cannot be separated from the electronic device 100.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

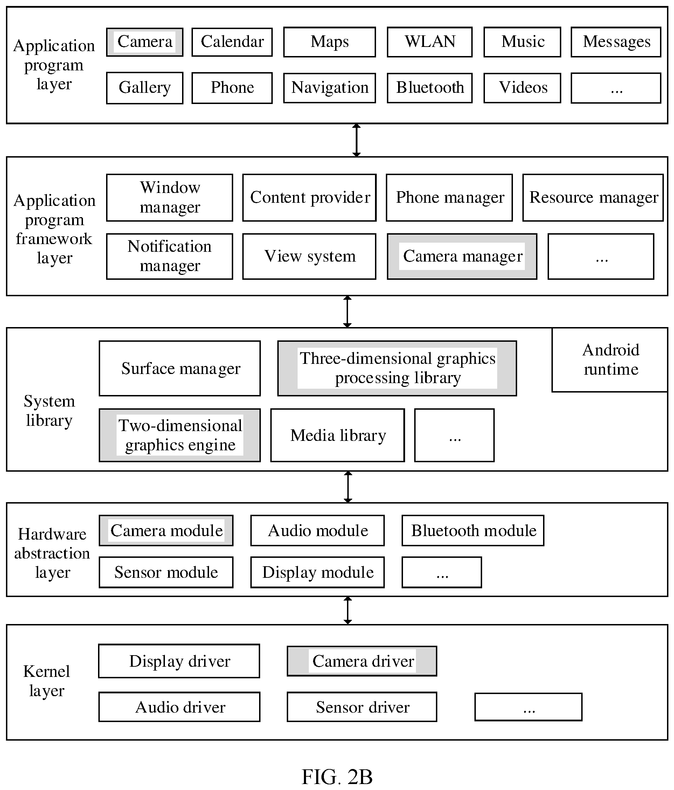

**FIG. 2B** **is a block diagram of a software structure of an electronic device 100 according to an embodiment of this application.**

In a layered architecture, software is divided into several layers, and each layer has a clear role and task. The layers communicate with each other through a software interface. In some embodiments, an Android system is divided into five layers: an application program layer, an application program framework layer, an Android runtime (Android runtime) and system library layer, a hardware abstraction layer (hardware abstraction layer, HAL), and a kernel layer from top to bottom.

The application program layer may include a series of application program packages.

As shown in FIG. 2B, the application program package may include application programs such as Camera, Gallery, Calendar, Phone, Maps, Navigation, WLAN, Bluetooth, Music, Videos, and Messages.

The application program framework layer provides an application programming interface (application programming interface, API) and a programming framework for an application program at the application program layer. The application program framework layer includes some predefined functions.

As shown in FIG. 2B, the application program framework layer may include a window manager, a content provider, a phone manager, a resource manager, a notification manager, a view system, a camera manager, and the like.

The window manager is configured to manage a window program. The window manager may obtain a size of a display screen, determine whether there is a status bar, perform screen locking, take a screenshot, and the like.

The content provider is configured to: store and obtain data, and enable the data to be accessed by an application program. The data may include a video, an image, audio, calls that are made and answered, a browsing history and bookmarks, a phone book, and the like.

The phone manager is configured to provide a communication function of the electronic device 100, for example, management of a call status (including answering, hanging up, or the like).

The resource manager provides various resources such as a localized character string, an icon, a picture, a layout file, and a video file for an application program.

The notification manager enables an application program to display notification information in a status bar, and may be configured to convey a notification-type message. The message may automatically disappear after a short stay without user interaction. For example, the notification manager is configured to notify download completion, give a message reminder, and the like. The notification manager may alternatively be a notification that appears in a top status bar of the system in a form of a graph or a scroll bar text, for example, a notification of an application program that runs in a background, or may be a notification that appears on the screen in a form of a dialog window. For example, text information is prompted in the status bar, a prompt tone is played, the electronic device vibrates, or an indicator light blinks.

The view system includes visual controls such as a control for displaying a text and a control for displaying a picture. The view system may be configured to construct an application program. A display interface may include one or more views. For example, a display interface including an SMS message notification icon may include a text display view and a picture display view.

The camera manager provides a series of camera-related interfaces, such as a Camera2 API, so that a developer can access and control camera-related data.

Android runtime includes a core library and a virtual machine. The Android runtime is responsible for scheduling and managing the Android system.

The core library includes two parts: One part is a functional function that needs to be invoked by a Java language, and the other part is a core library of Android.

The application program layer and the application program framework layer run on the virtual machine. The virtual machine executes Java files at the application program layer and the application program framework layer as binary files. The virtual machine is configured to perform functions such as object lifecycle management, stack management, thread management, security and exception management, and garbage collection.

The system library layer may include a plurality of functional modules, for example, a surface manager (surface manager), a three-dimensional graphics processing library (for example, OpenGL ES), a two-dimensional graphics engine (for example, SGL), and a media library.

The surface manager is configured to manage a display subsystem and provide fusion of 2D and 3D layers for a plurality of application programs.

The three-dimensional graphics processing library is configured to implement three-dimensional graphics drawing, image rendering, composition, layer processing, and the like.

The two-dimensional graphics engine is a drawing engine for 2D drawing.

The HAL provides a standard interface for abstracting hardware access to support communication between the kernel layer and another layer above the HAL layer. In this way, an upper-layer application and service do not need to directly communicate with hardware. The HAL may include a plurality of modules, for example, a camera module, an audio module, a Bluetooth module, a sensor module, and a display module.

The kernel layer is a layer between hardware and software. The kernel layer includes at least a display driver, a camera driver, an audio driver, and a sensor driver.

The following describes an example of a working procedure of software and hardware of the electronic device 100 with reference to a photo capturing scenario.

When a touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application program framework layer obtains the original input event from the kernel layer, and recognizes a control corresponding to the input event. An example in which the touch operation is a touch tap operation, and a control corresponding to the tap operation is a control of a camera application icon is used. A camera application invokes an interface at the application framework layer to enable the camera application, then enables the camera driver by invoking the kernel layer, and captures a static image or a video through the camera 193.

Based on the software structure of the electronic device 100 shown in FIG. 2B, the following describes a process in which the electronic device 100 obtains and displays a real-time preview picture. The camera driver at the kernel layer may receive an original preview picture collected and sent by the camera. The original preview picture may be transmitted in a form of a video stream. The camera driver may send the original preview picture to the camera module at the HAL. The camera module may perform format conversion on the original preview picture, and a picture obtained through the format conversion can be understood and processed by another layer above the HAL. Then, the camera module at the HAL may send the processed picture to the system library. A related module in the system library may perform further processing on the picture. For example, the three-dimensional graphics processing library may perform complex graphics rendering based on received data, and the two-dimensional graphics engine may perform graphics processing on the picture. Then, the system library may send a real-time preview picture obtained through the further processing to the camera manager at the application program framework layer. The camera application at the application program layer may obtain and display the real-time preview picture through an interface provided by the camera manager.

In embodiments of this application, a process of determining a photographing subject and determining a recommended composition including the photographing subject may be performed by the camera application at the application program layer. This process is described in detail in subsequent embodiments of this application, and is not specifically described herein.

**The following describes, by using an example, user interfaces used when the electronic device 100 takes a photo.**

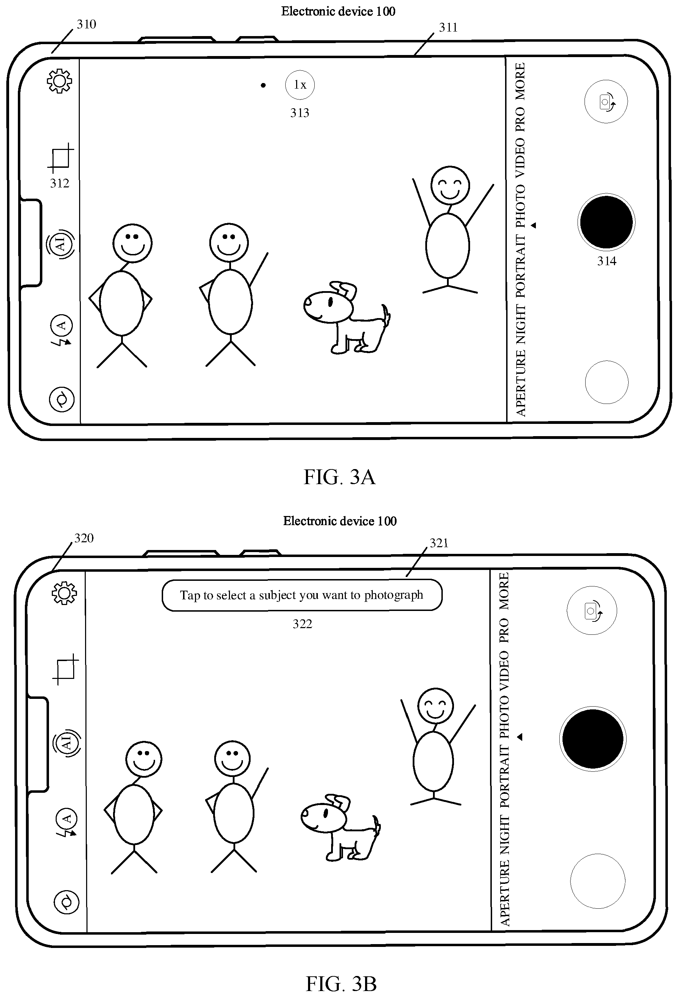

**FIG. 3A to FIG. 3F** **show examples of user interfaces used when the electronic device 100 determines a photographing subject.**

FIG. 3A shows an example of a user interface 310. The user interface 310 may be a photographing interface provided by the camera application of the electronic device 100. As shown in FIG. 3A, the user interface 310 may include a viewfinder frame 311, a function switch 312, a focal length adjustment control 313, and a photographing button 314. The viewfinder frame 311 is used to display a first real-time preview picture obtained by a first camera. The function switch 312 is used to trigger the electronic device 100 to enable or disable an "intelligent photography coach" function. The focal length adjustment control 313 is used to trigger a camera to adjust a focal length, so that a user can take photos in different field of view ranges. The photographing button 314 is used to trigger the electronic device 100 to take a photo. When the "intelligent photography coach" function is enabled, the electronic device 100 may first determine a subject that the user currently wants to photograph, determine a recommended composition based on the subject, and then guide the user to adjust a photographing orientation to perform photographing, so as to obtain a photo similar to the recommended composition. In some other implementations, the "intelligent photography coach" may also be referred to as another name, for example, a "photographing assistant" or "photographing assistance". A specific name of the function is not limited in this embodiment of this application.

When the electronic device 100 does not enable the "intelligent photography coach" function, if an input operation (for example, a touch operation) performed by the user on the function switch 312 is detected, in response to the input operation, the electronic device 100 may enable the "intelligent photography coach" function, and display a user interface 320 shown in FIG. 3B. The user interface 320 includes a viewfinder frame 321 and prompt information 322. The viewfinder frame 321 is used to display the first real-time preview picture obtained by the first camera. The prompt information 322 is used to prompt the user to select a photographing subject from a plurality of objects displayed in the first real-time preview picture. The prompt information 322 may be implemented as a text, a picture, sound content, or the like. For example, the prompt information 322 may be implemented as a text "Tap to select a subject you want to photograph". A specific form of the prompt information 322 is not limited in this embodiment of this application.

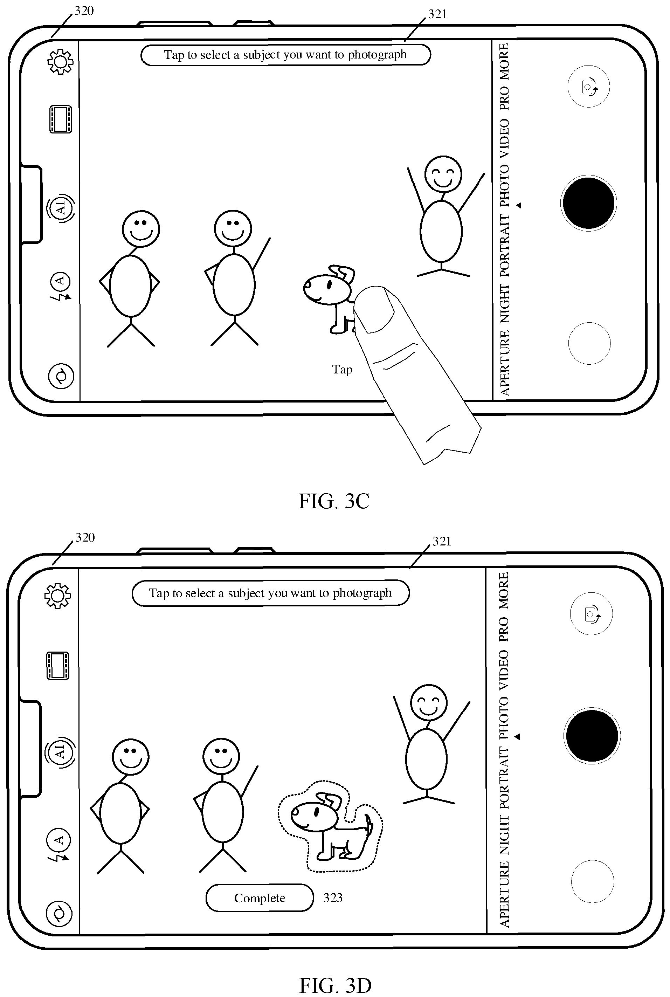

The user may select the photographing subject through tapping. For example, as shown in FIG. 3C, a tap operation performed by the user on a first area in the first real-time preview picture displayed in the viewfinder frame 321 is detected. In response to the tap operation, the electronic device 100 may determine a pet dog near the area as the photographing subject.

After determining the photographing subject, as shown in FIG. 3D, the electronic device 100 may display a dashed-line frame closely fitting a contour of the photographing subject. In some implementations, the user may fine-tune a contour range of the photographing subject. For example, when receiving an operation of inwardly or outwardly dragging an edge of the dashed-line frame, the electronic device 100 may adjust the contour range of the photographing subject, to more precisely determine the photographing subject. In addition, the electronic device 100 may further display a complete button 323. After the user has selected all subjects that the user wants to photograph, the user may trigger, by using the complete button 323, the electronic device 100 to end the photographing subject selection process.

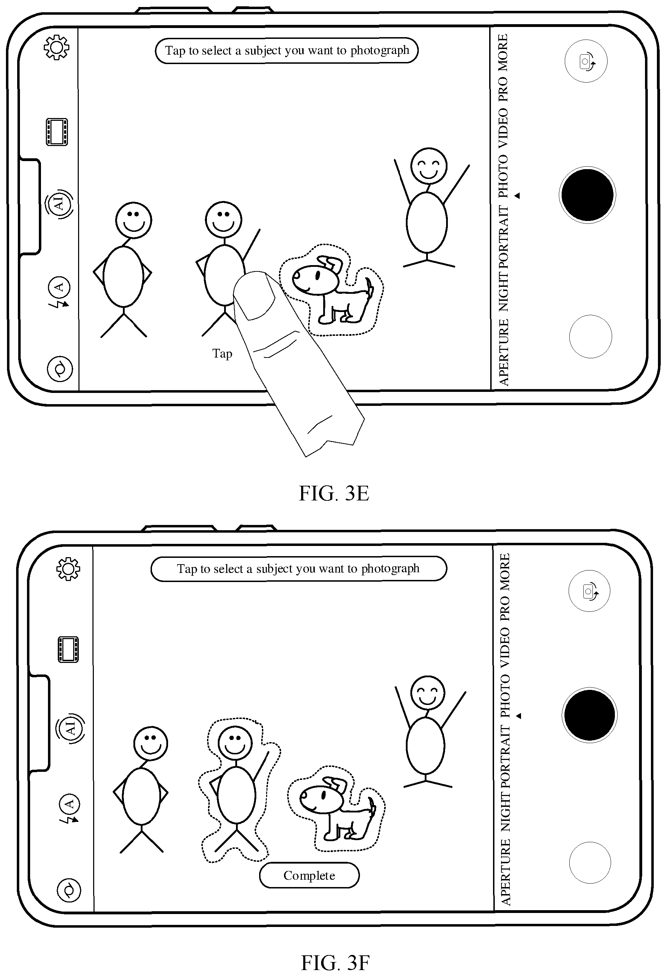

The user may select a plurality of photographing subjects. As shown in FIG. 3E, a tap operation performed by the user on a second area in the first real-time preview picture displayed in the viewfinder frame 321 is detected. In response to the tap operation, the electronic device 100 performs subject recognition by using the second area as a center. Because a figure with a raised hand is displayed near the second area, the electronic device 100 may also determine the figure with a raised hand as the photographing subject, and highlight the photographing subject. Then, an input operation (for example, a touch operation) performed by the user on the complete button 323 is detected. In response to the input operation, the electronic device 100 may end the photographing subject selection process.

After determining the photographing subject, the electronic device 100 may determine a recommended composition based on the first real-time preview picture. Because photographing subjects previously determined by the electronic device 100 are the pet dog and the figure with a raised hand, the recommended composition determined by the electronic device 100 also includes the two photographing subjects. A process of determining the recommended composition by the electronic device 100 is described in detail in a subsequent embodiment of this application, and is not specifically described herein.

After determining the recommended composition, the electronic device 100 may guide the user, to assist the user in adjusting the photographing orientation to take a photo that is the same as or similar to the recommended composition.

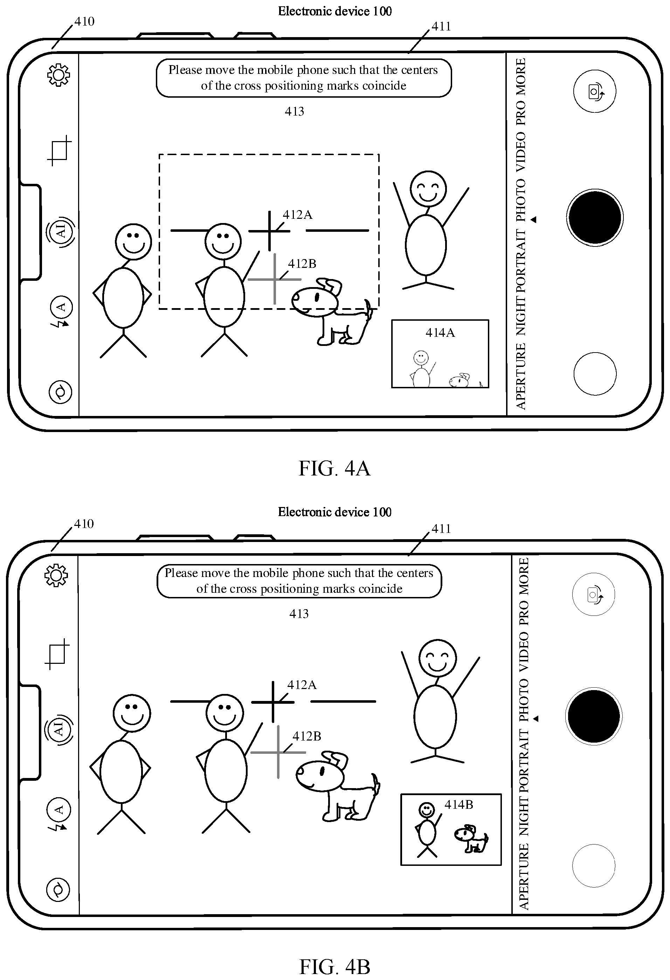

**FIG. 4A to FIG. 4E** **show examples of user interfaces of the electronic device 100 that are used when a user is guided to take a photo.**

FIG. 4A shows an example of a user interface 410. As shown in FIG. 4A, the user interface 410 may include a viewfinder frame 411, a center positioning mark 412A, a reference positioning mark 412B, prompt information 413, and a preview frame 414A. The viewfinder frame 411 is used to display a first real-time preview picture obtained by a first camera. The center positioning mark 412A and the reference positioning mark 412B are used to guide a user to adjust a photographing orientation. The center positioning mark 412A is located in a center of the viewfinder frame. The reference positioning mark 412B is located in a center of an area in which a recommended composition is located. The prompt information 412 is used to prompt the user to adjust the photographing orientation. The preview frame 414A may be used to display a second real-time preview picture taken by a second camera, so as to better present a photographing effect to the user, and assist the user in adjusting the photographing orientation. In some implementations, as shown in FIG. 4B, the electronic device 100 may display a preview frame 414B instead of the preview frame 414A. The preview frame 414B may be used to display the recommended composition determined by the electronic device 100.

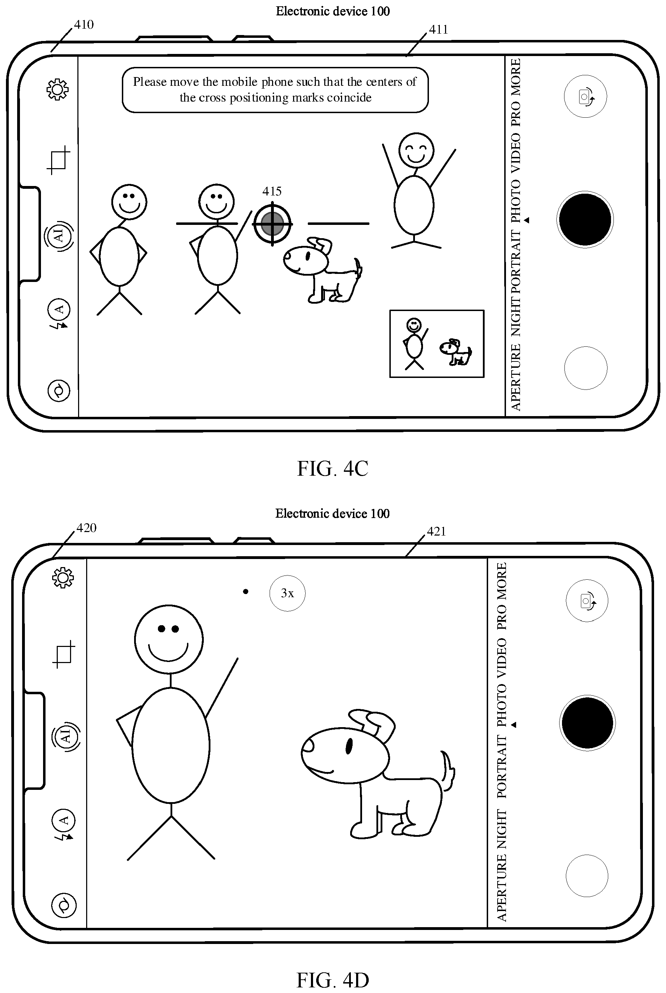

In a process in which the user adjusts the photographing orientation, the center positioning mark 412A is always located at a central location of the first real-time preview picture. However, for the reference positioning mark 412B, due to a change of the photographing orientation, the first real-time preview picture obtained by the camera of the electronic device 100 changes accordingly, and as a result, a location of the area in which the recommended composition is located in the first real-time preview picture also changes. Therefore, when the user adjusts the photographing orientation, a location of the reference positioning mark 412B located in the center of the area in which the reference composition is located continuously changes. When the center positioning mark 412A coincides with the reference positioning mark 412B or a distance between the center positioning mark 412A and the reference positioning mark 412B is less than a preset value, the electronic device 100 may display an alignment mark 415 on the user interface 410 shown in FIG. 4C.

Then, as shown in FIG. 4D, the electronic device 100 may display a user interface 420 through automatic zooming by the device or manual focus adjustment by the user. A preview frame 421 on the user interface 420 displays the second real-time preview picture obtained by the second camera. A field of view range of the second real-time preview picture is the same as a field of view range of the recommended composition, and content in the second real-time preview picture may be the same as or similar to content in the recommended composition.

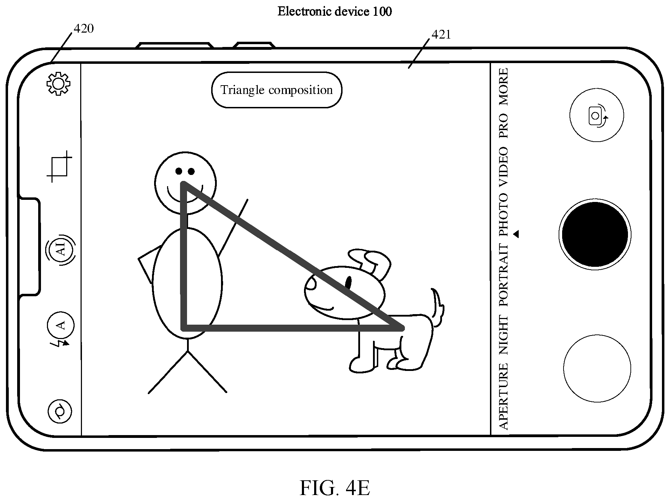

Then, as shown in FIG. 4E, because the second real-time preview picture meets a triangular composition in a composition principle, a composition prompt displayed by the electronic device 100 may be implemented as a text "Triangular composition" and graphical lines of a triangle.

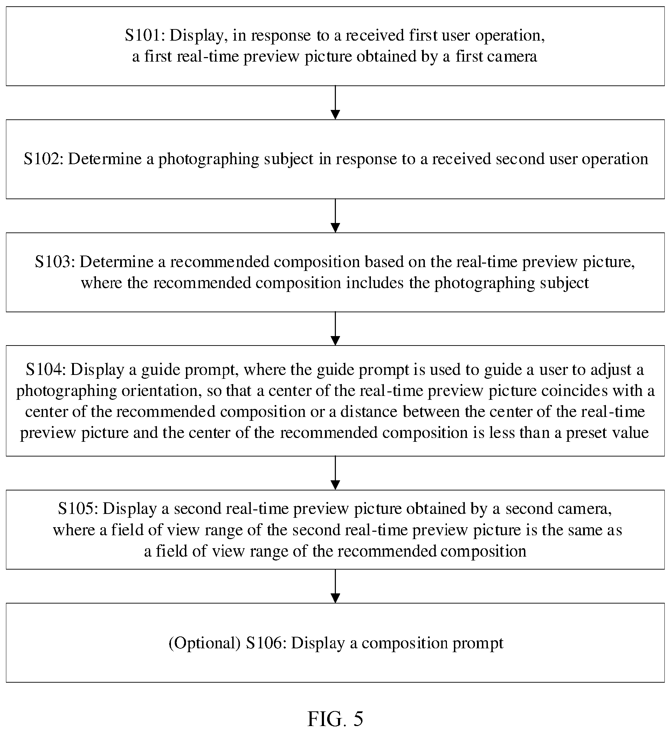

FIG. 5 is a flowchart of a photographing method according to an embodiment of the present invention. The method is applied to the electronic device 100. As shown in FIG. 5, the method includes the following steps.

**Step S101: Display, in response to a received first user operation, a first real-time preview picture obtained by a first camera.**

In some implementations, the first user operation may be a user operation that triggers the electronic device 100 to run the camera application. In some other implementations, the first user operation may alternatively be a user operation that triggers, when the electronic device 100 runs another application, the electronic device 100 to invoke a camera to take a photo. A specific form of the first user operation is not limited in this embodiment of this application.

In response to the received first user operation, the electronic device 100 may display the first real-time preview picture obtained by the first camera. The first real-time preview picture may be used as an important reference for a user to adjust a photographing angle and a photographing parameter.

In some implementations, if the electronic device 100 includes a plurality of cameras, and focal lengths of the cameras are different, the first camera may be a camera with a smallest focal length and a largest field of view range in the electronic device 100.

**Step S102: Determine a photographing subject in response to a received second user operation.**

In some implementations, the electronic device 100 may first receive the second user operation. The second user operation is an input operation performed by the user on an area in the first real-time preview picture. The input operation may be implemented as a tap operation, a touch and hold operation, a smear operation, or the like performed on an area in the first real-time preview picture. The smear operation is an operation of sliding back and forth on a screen surface of the electronic device 100. A specific form of the input operation is not limited in this embodiment of this application.

In response to the received second user operation, the electronic device 100 may perform object recognition on the first real-time preview picture to determine one or more objects in the first real-time preview picture. Then, the electronic device 100 may determine an object located in an action area of the second user operation as the photographing subject.

For example, when receiving a tap operation performed by the user on the first area in the first real-time preview picture displayed in the viewfinder frame 321 shown in FIG. 3C, the electronic device 100 may perform object recognition to determine four objects. Among the four objects, because the pet dog is located in the first area, the electronic device 100 may determine the pet dog as the photographing subject.

In some other implementations, before performing step S102, the electronic device 100 may first perform object recognition on the first real-time preview picture to determine one or more objects. Then, in response to the received second user operation, the electronic device 100 may determine an object closest to a center of an action area of the second user operation as the photographing subject.

In addition, in some implementations, the electronic device 100 may enable a front-facing camera to obtain a real-time preview picture of the front-facing camera. The electronic device 100 may perform point-of-view tracking on the real-time preview picture obtained by the front-facing camera, and determine, as the photographing subject, an object that is in the first real-time preview picture and that is located in an area gazed at by the user. In a photographing process, the user usually pays, at every moment, attention to a status of a subject that the user wants to photograph on a screen. Therefore, determining the photographing subject in this manner not only saves an additional action that the user needs to perform in the photographing process, but also enhances photographing experience of the user, and the determined photographing subject may better meet a photographing expectation of the user.

In some implementations, the electronic device 100 may highlight the photographing subject. For example, a highlighting manner may be: displaying a dashed-line frame that closely fits a contour of the photographing subject and that is shown in FIG. 3D or FIG. 3F, or displaying, in a form of a contrast color, content in an area in which the photographing subject is located.

Considering that the user may want to simultaneously take a photo of a plurality of different subjects, in some implementations, the electronic device 100 may perform step S102 a plurality of times, to determine a plurality of different photographing subjects.

**Step S103: Determine a recommended composition based on the real-time preview picture, where the recommended composition includes the photographing subject.**

In some implementations, the electronic device 100 may input the first real-time preview picture into a pre-trained aesthetic evaluation model. The aesthetic evaluation model may first determine a plurality of compositions based on the first real-time preview picture, and the plurality of compositions may all include the photographing subject. Then, the electronic device 100 may separately perform aesthetic scoring on the plurality of compositions, and determine a composition with a highest aesthetic score as the recommended composition. In some other implementations, the electronic device 100 may display a plurality of compositions with highest aesthetic scores, and then determine, as the recommended composition, a composition selected by the user from the plurality of compositions.

In some implementations, if the electronic device 100 includes a plurality of cameras, and the electronic device 100 can simultaneously enable the plurality of cameras, the electronic device 100 may further enable a third camera when displaying the first real-time preview picture obtained by the first camera, where a focal length of the third camera is less than a focal length of the first camera. The electronic device 100 may obtain a third real-time preview picture by using the third camera, and determine the recommended composition based on the third real-time preview picture. Due to the difference between the focal lengths, a field of view range of the third real-time preview picture is greater than a field of view range of the first real-time preview picture. Therefore, compared with the first real-time preview picture, determining the recommended composition based on the third real-time preview picture may enable the electronic device 100 to have a larger recommended composition selection range. In this way, the recommended composition determined by the electronic device 100 may be more aesthetically pleasing, and better meet a photographing expectation of the user.

In some other implementations, the electronic device 100 may stitch a plurality of first real-time preview pictures at different moments into one stitched picture. A field of view range of the stitched picture is greater than the field of view range of the single first real-time preview picture. Then, the electronic device 100 may determine the recommended composition based on the stitched picture. According to the foregoing policy, the electronic device 100 may expand a selection range for determining the recommended composition. In this way, the recommended composition determined by the electronic device 100 may be more aesthetically pleasing, and better meet a photographing expectation of the user.

In addition, the electronic device 100 may alternatively determine the recommended composition in another manner. A manner in which the electronic device 100 determines the recommended composition is not specifically limited in this embodiment of this application.

Because the recommended composition determined by the electronic device 100 needs to include the photographing subject, in a process of determining the recommended composition, the electronic device 100 may quickly exclude a composition option that does not include the photographing subject, so as to narrow a recommended composition selection range more quickly. In this way, a speed at which the electronic device 100 determines the recommended composition can be increased. In addition, the electronic device 100 first determines the photographing subject, and then determines the recommended composition based on the real-time preview picture, so that the recommended composition is closer to a photographing expectation of the user, thereby preventing a problem that the recommended composition determined by the electronic device 100 does not include a subject that the user wants to photograph, and enhancing user experience in a photographing process.

**Step S104: Display a guide prompt, where the guide prompt is used to guide the user to adjust a photographing orientation, so that a center of the first real-time preview picture coincides with a center of the recommended composition or a distance between the center of the first real-time preview picture and the center of the recommended composition is less than a preset value.**

The electronic device 100 may display the guide prompt to guide the user to adjust the photographing orientation, so that the center of the first real-time preview picture coincides with the center of the recommended composition or the distance between the center of the first real-time preview picture and the center of the recommended composition is less than the preset value. The guide prompt may be implemented in a plurality of forms. In some implementations, the guide prompt may include a center positioning mark and a reference positioning mark. The center positioning mark is located at a central location of the first real-time preview picture. The reference positioning mark is located at a central location of an area in which the recommended composition is located. In a process of adjusting the photographing orientation, a location of the center positioning mark remains unchanged, and a location of the reference positioning mark continuously changes. For example, the center positioning mark may be implemented as the center positioning mark 412A on the user interface 410 shown in FIG. 4A, and the reference positioning mark may be implemented as the reference positioning mark 412B on the user interface 410 shown in FIG. 4A.

In some implementations, the guide prompt displayed by the electronic device 100 may include a thumbnail of the second real-time preview picture obtained by the second camera, where a field of view range of the second real-time preview picture is the same as a field of view range of the recommended composition. In some other implementations, the guide prompt displayed by the electronic device 100 may include a thumbnail of the recommended composition that is previously determined by the electronic device 100. By displaying the thumbnail of the second real-time preview picture or the recommended composition, the electronic device 100 can better assist the user in adjusting the photographing orientation, and display a photographing effect to the user, thereby enhancing experience of the user in the process of adjusting the photographing orientation.

In some other implementations, the guide prompt displayed by the electronic device 100 may further include a prompt text. For example, the prompt text may be implemented as the prompt information 413 on the user interface 410 shown in FIG. 4A.

In addition, the guide prompt may alternatively be implemented in another form, for example, an indication arrow. A specific form of the guide prompt is not limited in this embodiment of this application.

In the process in which the user adjusts the photographing orientation, a location of the recommended composition in the first real-time preview picture changes, so that a location of the reference positioning mark located in a center of the recommended composition also changes accordingly. Therefore, the electronic device 100 needs to continuously update the location of the reference positioning mark, so that the user can correctly adjust the photographing orientation based on the location of the reference positioning mark.

In some implementations, the electronic device 100 may obtain, based on data obtained through measurement by an inertial measurement unit (inertial measurement unit, IMU), a movement direction and a movement distance that are used when the user adjusts the photographing orientation. Then, the electronic device 100 may determine a location of the reference positioning mark in the first real-time preview picture based on the movement direction and the movement distance. Comparison with searching the entire first real-time preview picture for the location of the reference positioning mark, using the foregoing policy can increase a speed at which the electronic device 100 updates the location of the reference positioning mark, thereby enhancing experience of adjusting the photographing orientation by the user under guidance of the electronic device 100.

In some implementations, the electronic device 100 may display an alignment mark when the center of the first real-time preview picture coincides with the center of the recommended composition or the distance between the center of the first real-time preview picture and the center of the recommended composition is less than the preset value. For example, the alignment mark may be implemented as the alignment mark 415 on the user interface 410 shown in FIG. 4B.

**Step S105: Display the second real-time preview picture obtained by the second camera, where the field of view range of the second real-time preview picture is the same as the field of view range of the recommended composition.**

When the center of the real-time preview picture coincides with the center of the recommended composition or the distance between the center of the real-time preview picture and the center of the recommended composition is less than the preset value, the electronic device 100 may display, through automatic zooming by the device or manual focus adjustment by the user, the second real-time preview picture obtained by the second camera. The field of view range of the second real-time preview picture is the same as the field of view range of the recommended composition. The second camera may be the same as or different from the first camera. For example, the second real-time preview picture may be a picture displayed in the preview frame 421 on the user interface 420 shown in FIG. 4D. In this case, content in the second real-time preview picture may be the same as or similar to content in the recommended composition.

**(Optional) Step S106: Display a composition prompt.**

The composition prompt is used to prompt a composition rule that is in a composition principle and that is met by the recommended composition. For example, the composition prompt may be implemented as the text "Triangular composition" and the graphical lines of a triangle on the user interface 420 shown in FIG. 4E.

In addition, the composition prompt may alternatively be implemented in another form. For example, the composition prompt is displayed in manner of a pop-up window prompt. After the user adjusts the photographing orientation based on guidance of the electronic device 100 and takes a photo, a composition prompt watermark is added to the photo, and/or a composition information tag is added to the photo. A specific form of the composition prompt is not limited in this embodiment of this application.

As described above, if a captured photo does not meet a composition principle, the photo lacks aesthetic quality and has a poor effect. Therefore, the composition prompt is displayed, so that perception and trust of the user in assistance provided by the electronic device 100 in photographing can be improved.

## Claims

1. A photographing method, wherein the method is applied to an electronic device, and the method comprises:
displaying a first real-time preview picture obtained by a first camera;
in response to a received user operation performed on a first area of the first real-time preview picture, determining an object located in the first area as a photographing subject;
determining a recommended composition based on a location of the photographing subject, wherein the recommended composition comprises the photographing subject;
displaying a guide prompt, wherein the guide prompt is used to guide a user to adjust a photographing orientation, so that a center of the first real-time preview picture coincides with a center of the recommended composition or a distance between the center of the first real-time preview picture and the center of the recommended composition is less than a preset value; and
when the center of the first real-time preview picture coincides with the center of the recommended composition or the distance between the center of the first real-time preview picture and the center of the recommended composition is less than the preset value, displaying a second real-time preview picture obtained by a second camera, wherein a field of view range of the second real-time preview picture is the same as a field of view range of the recommended composition.

2. The method according to claim 1, wherein the electronic device comprises the first camera and the second camera, and a focal length of the first camera is less than a focal length of the second camera.

3. The method according to claim 1, wherein the determining the recommended composition specifically comprises:
determining the recommended composition based on the first real-time preview picture; or
determining the recommended composition based on a third real-time preview picture obtained by a third camera, wherein a field of view range of the third real-time preview picture is greater than a field of view range of the first real-time preview picture.

4. The method according to claim 1 or 2, wherein the determining the recommended composition specifically comprises:
stitching a plurality of first real-time preview pictures at different moments to obtain a stitched picture, wherein a field of view range of the stitched picture is greater than a field of view range of the first real-time preview picture; and
determining the recommended composition based on the stitched picture.

5. The method according to any one of claims 1 to 4, wherein the method further comprises:
displaying a composition prompt, wherein the composition prompt indicates a composition rule met by the recommended composition to the user.

6. The method according to any one of claims 1 to 5, wherein the guide prompt comprises:
a center positioning mark and a reference positioning mark, wherein the center positioning mark is located at a central location of the first real-time preview picture; and the reference positioning mark is located at a central location of the recommended composition;
a thumbnail of the second real-time preview picture; and/or
a thumbnail of the recommended composition.

7. The method according to any one of claims 1 to 6, wherein the user operation comprises:
a tap operation, a touch and hold operation, or a smear operation performed on the first area.

8. An electronic device, wherein the electronic device comprises a memory, a processor, and a sensor, the memory is configured to store a computer program, and the processor is configured to invoke the computer program, so that the electronic device performs the method according to any one of claims 1 to 7.

9. A computer program product comprising instructions, wherein when the computer program product runs on an electronic device, the electronic device is enabled to perform the method according to any one of claims 1 to 7.

10. A computer-readable storage medium, comprising instructions, wherein when the instructions are run on an electronic device, the electronic device is enabled to perform the method according to any one of claims 1 to 7.
